# EUROPÄISCHE PATENTSCHRIFT

(11) **EP 0 512 240 B1**
(45) Veröffentlichungstag und Bekanntmachung des Hinweises auf die Patenterteilung: **31.08.1994**
(21) Anmeldenummer: 92105281.7
(22) Anmeldetag: 27.03.1992
(51) Int. Cl.: F02D 41/26, F02D 41/22

(54) **System zur Steuerung eines Kraftfahrzeuges**
System for the control of motor vehicles
Système de commande pour véhicule à moteur

(30) Priorität: 08.05.1991 DE 4114999
(43) Veröffentlichungstag der Anmeldung: 11.11.1992
(73) Patentinhaber: ROBERT BOSCH GMBH, 70442 Stuttgart (DE)
(72) Erfinder: Wessel, Wolf, W-7141 Oberriexingen (DE); Kirschner, Michael, Dipl.-Ing., W-7140 Ludwigsburg (DE); Hall, Dieter, W-7141 Schwieberdingen (DE); Berger, Joachim, Dipl.-Ing., W-7065 Winterbach (DE); Seher, Dieter, Dr.-Ing., W-7129 Ilsfeld (DE); Gerstung, Ulrich, Dipl.-Ing., W-7143 Vaihingen/Enz (DE); Grosser, Martin, Dipl.-Ing., W-7000 Stuttgart 1 (DE); Zimmermann, Werner, Dr., W-7000 Stuttgart 40 (DE); Poledna, Stefan, A-1020 Wien (AT); Schmidt, Karl-Heinz, Dipl.-Ing., A-7400 Oberwart (AT); Bittinger, Wolfgang, Dr., A-1150 Wien (AT); Dittrich, Wolfgang, A-1130 Wien (AT); Forster, Felix, A-1100 Wien (AT)

(56) Entgegenhaltungen:
- EP-A- 0 127 789
- EP-A- 0 222 047
- EP-A- 0 322 141
- GB-A- 2 026 705
- GB-A- 2 172 715
- ELEKTRONIK. Bd. 38, Nr. 10, 12. Mai 1989, MUNCHEN DE Seiten 88 - 90; STEFFEN STORANDT ET AL.: 'SICHERE UND FEHLERTOLERANTE MIKROCONTROLLER SYSTEME'
- 16. ISATA, FLORENZ, 11. - 15.05.87; Vortrag 87016

## Beschreibung

### Stand der Technik

Die Erfindung betrifft ein System zur Steuerung eines Kraftfahrzeuges gemäß dem Oberbegriff des Anspruchs 1.

Ein System zur Steuerung eines Kraftfahrzeugs ist aus der DE-OS-35 31 198 bekannt. Dort wird ein System zur Steuerung einer Dieselbrennkraftmaschine beschrieben. Dieses System umfaßt einen Hauptrechner und einen Ersatzrechner. Erkennt eine Überwachungseinrichtung einen Defekt im Hauptrechner, so wird auf den Ersatzrechner umgeschaltet.

Desweiteren sind Systeme bekannt, bei denen ein erster Mikrorechner Steuerdaten, die zur Steuerung des Kraftfahrzeuges benötigt werden, bestimmt. Eine Überwachungseinrichtung überprüft, ob der erste Mikrorechner korrekt arbeitet. Diese Überwachungseinrichtung kann entweder als Mikrorechner oder in der einfachsten Form als festverdrahteter Baustein ausgeführt sein. Erkennt die Überwachungseinrichtung einen sicherheitskritischen Betriebszustand, so versetzt die sicherheitsrelevante Ausgangsgröße über ein entsprechendes Sicherheitssignal in einen sicheren Zustand. Dies bedeutet, daß zum Beispiel die Kraftstoffeinspritzung unterbunden und/oder die Drosselklappe geschlossen wird.

Eine solche Überwachungseinrichtung ist zum Beispiel aus der DE-OS-32 40 707 bekannt. Die dort beschriebende Überwachungseinrichtung beaufschlagt in regelmäßigen Zeitabständen das Steuergerät mit einem sogenannten Triggersignal. Ist der Abstand zwischen zwei Triggerimpulsen größer oder kleiner, als eine in der Überwachungseinrichtung abgelegte Zeitdauer, so erkennt die Überwachungseinrichtung auf Fehler und leitet entsprechende Maßnahmen ein. Mit einem solchen Überwachungskonzept kann im wesentlichen nur ein Totalausfall des Rechners erkannt werden. Eine fehlerhafte Signalverarbeitung erkennt eine solche Watchdog nicht.

Ein System zur Steuerung eines Kraftfahrzeuges gemäß dem Oberbegriff des Anspruchs 1 ist aus der EP-A 0 322 141 bekannt. Dieses System umfaßt eine erste Einrichtung zur Bestimmung von Steuerdaten eines Kraftfahrzeugs sowie eine zweite Einrichtung zur Überwachung der ersten Einrichtung. Sowohl die erste als auch die zweite Einrichtung addieren zu einem Ausgangswert eine Primzahl. Die Ergebnisse der beiden Einrichtungen werden verglichen. Bei einer unzulässigen Abweichung erkennt die Überwachungseinrichtung auf Fehler. Die Ergebnisse dienen jeweils als neuer Ausgangswert für den folgenden Prüfzyklus.

Ein weiteres System zur Steuerung eines Kraftfahrzeuges ist in der EP-A 1 27 789 beschreiben. Dieses System zur Steuerung enthält ebenfalls eine erste und zweite Einrichtung, wobei die zweite Einrichtung die erste Einrichtung überprüft. Insbesondere wird hier der Datenaustausch zwischen den beiden Einrichtungen auf ordnungsgemäße Abarbeitung überprüft. Es ist vorgesehen, daß jeweils die Einrichtungen die Quersumme aller übertragenen Daten mit einem abgespeicherten Wert vergleichen.

Nachteilig bei diesen bekannten Einrichtungen ist, daß bei einem erkannten Fehler nicht entschieden werden kann, ob die erste Einrichtung oder die Überwachungseinrichtung fehlerhaft arbeitet. So wird auch bei einem Defekt der Überwachungseinrichtung ein unnötiger Notfahrbetrieb eingeleitet oder die Brennkraftmaschine abgeschaltet.

### Aufgabe der Erfindung

Der Erfindung liegt die Aufgabe zugrunde, bei einem System zur Überwachung der Steuerung eines Kraftfahrzeuges der eingangs genannten Art ein System zur Verfügung zu stellen, das einfacher aufgebaut als ein System mit zwei Rechnern und gleichzeitig mehr Fehler erfaßt, als ein System mit Watchdog. Ferner soll zwischen einem Defekt der Überwachungseinrichtung und der zu überwachenden Einrichtung unterschieden werden können.

### Vorteile der Erfindung

Das beschriebene System zur Überwachung einer Steuereinrichtung eines Kraftfahrzeugs besitzt den Vorteil, daß es bei einfachem Aufbau ein hohes Maß an Sicherheit gewährleistet. So kann das erfindungsgemäße System eine Fehlfunktion der Überwachungseinrichtung erkennen.

Vorteilhafte und zweckmäßige Ausgestaltungen und Weiterbildungen der Erfindung sind in den Unteransprüchen gekennzeichnet.

### Zeichnung

Die Erfindung wird nachstehend anhand der in der Zeichnung dargestellten Ausführungsformen erläutert.

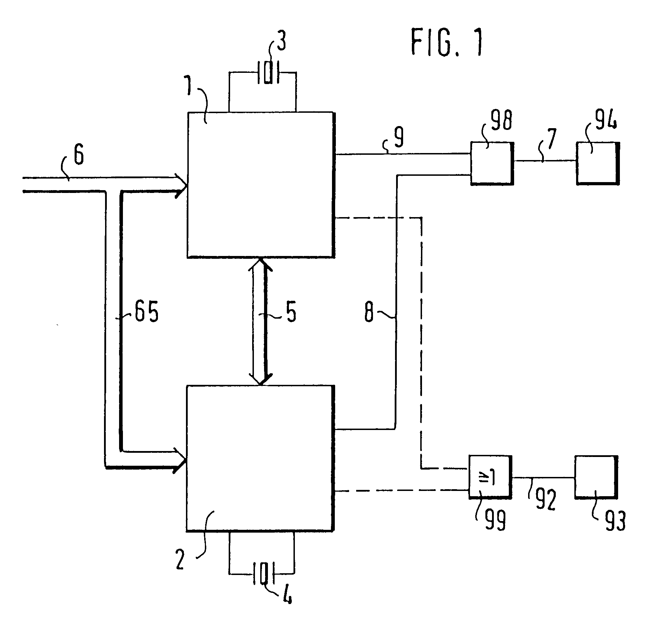

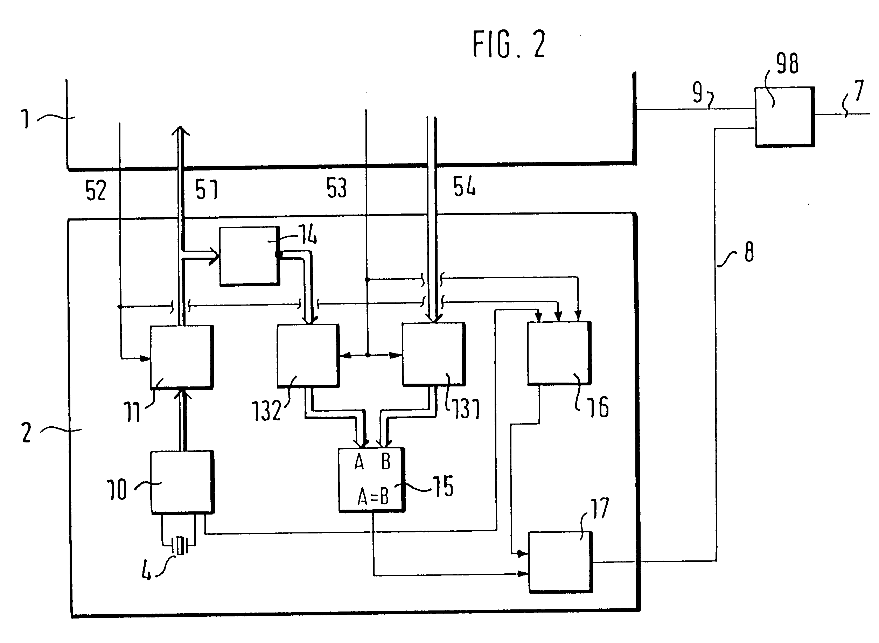

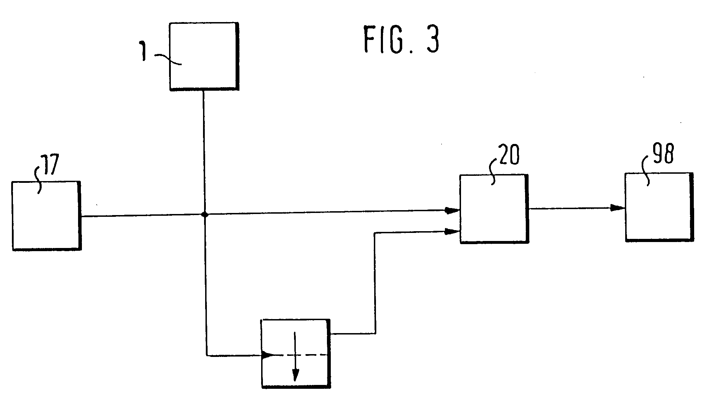

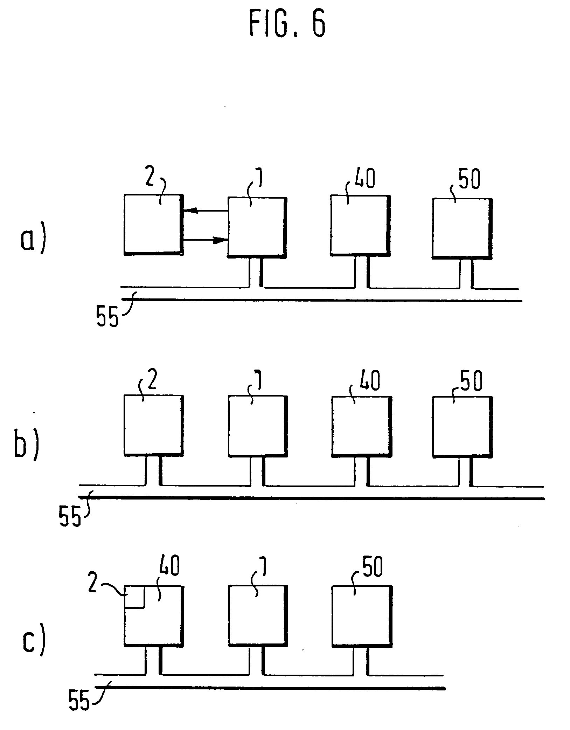

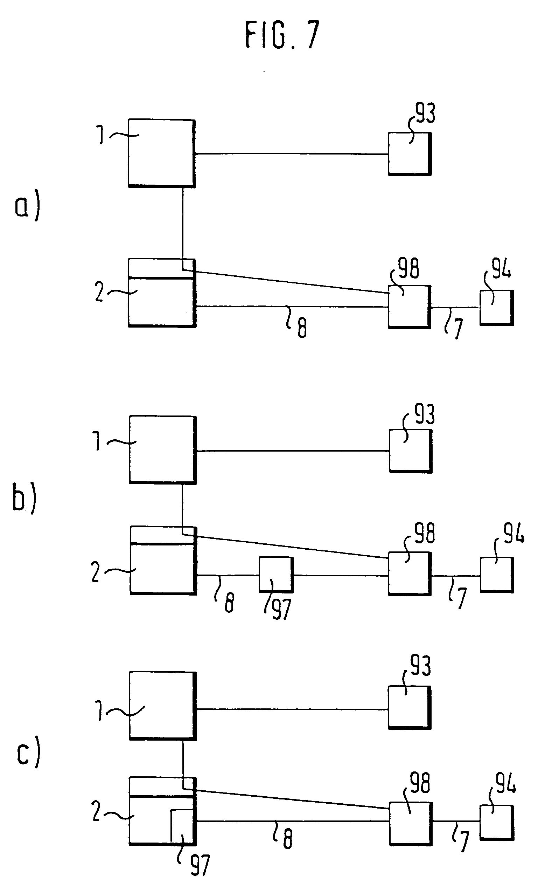

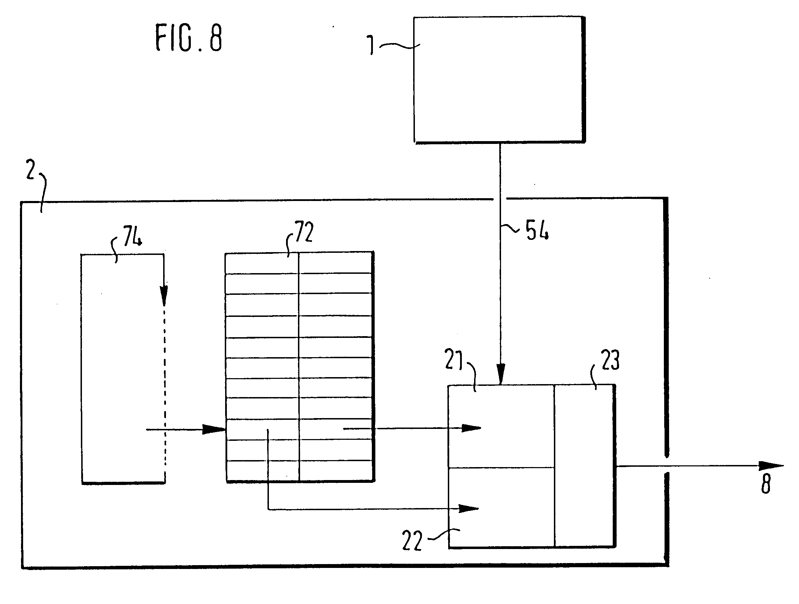

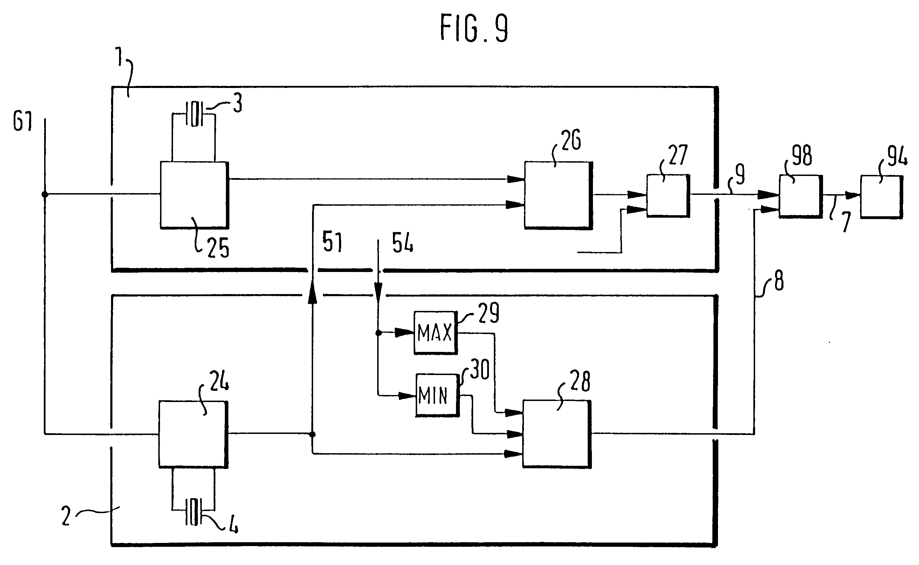

So zeigt die Figur 1 ein grobes Blockdiagramm des erfindungsgemäßen Systems, die Figur 2 eine detailliertere Darstellung des Überwachungssystems, die Figur 3 eine Ergänzung des Systems gemäß Figur 2, die Figuren 4 und 5 ein Flußdiagramm zur Verdeutlichung der erfindungsgemäßen Vorgehensweise, Figur 6 verschiedene Möglichkeiten der Kopplung der Überwachungseinrichtung und des Mikrorechners, Figur 7 ein grobe schematische Darstellung der wesentlichen Elemente, Figur 8 die wesentlichen Elemente einer weiteren Ausführungsform sowie die Figur 9 ein detailliertes Diagramm einer weiteren Ausführungsform.

### Beschreibung der Ausführungsbeispiele

Dem erfindungsgemäßen System liegt der Grundgedanke zugrunde, daß ein Mikrorechner und eine Überwachungseinrichtung beide in regelmäßigen Zeitabständen eine Signalverarbeitung durchführen, wobei die Überwachungseinrichtung und/oder der Mikrorechner die beiden Ergebnisse vergleichen und ausgehend von diesem Vergleich, auf das korrekte oder fehlerhafte Arbeiten des Mikrorechners schließen.

Die durchgeführte Berechnung ist vorzugsweise sehr einfach gestaltet. Es wird also nicht wie bei Parallelrechnersystemen der Mikrorechner doppelt ausgelegt und von der Überwachungseinrichtung die gleiche Berechnung wie vom Mikrorechner ausgeführt. Sondern es wird so vorgegangen daß sowohl der Mikrorechner als auch die Überwachungseinrichtung ausgehend von denselben Daten gemäß einer vorgegebenen Prüffunktion jeweils Ergebnisdaten berechnen.

Diese Ergebnisdaten werden dann verglichen und aufgrund von diesem Vergleich ein Fehler erkannt. Die zur Berechnung der Ergebnisdaten verwendete Prüffunktion ist in der Regel sehr einfach gestaltet, sie erfordert nur eine sehr geringe Rechenzeit.

Figur 1 zeigt ein grobes Blockdiagramm des erfindungsgemäßen Systems. Mit 1 ist ein Mikrorechner, der auch als erste Einrichtung bezeichnet wird, dargestellt. Mit 2 ist eine zweite Einrichtung, auch als Überwachungseinrichtung bezeichnet, gekennzeichnet. Der Mikrorechner 1 und die Überwachungseinrichtung 2 sind untereinander mit einer Datenleitung 5 verbunden. Des weiteren steht der Mikrorechner mit einer Eingangsdatenleitung 6 in Verbindung. Von dieser Eingangsdatenleitung 6 zweigt eine zweite Eingangsdatenleitung 65 ab, die zur Überwachungseinrichtung 2 führt.

Sowohl der Mikrorechner 1 als auch die Überwachungseinrichtung 2 sind jeweils mit einer unabhängigen Zeitbasis 3 bzw. 4 verbunden. Der Mikrorechner gibt über die Ansteuerleitung 9 ein Signal an eine Verknüpfungseinrichtung 98 ab. Der zweite Eingang der Verknüpfungseinrichtung 98 wird über eine Sicherheitsleitung 8 mit einem Sicherheitssignal beaufschlagt. Über die Ausgangsleitung 7 wird dann ein Stellwerk 94 mit einer Ausgangsgröße beaufschlagt.

Bei einer besonders vorteilhaften Ausgestaltung der Erfindung stehen sowohl der Mikrorechner 1 als auch die Überwachungseinrichtung 2 mit einer weiteren Verknüpfungseinrichtung 99 in Verbindung. Diese zweite Verknüpfungseinrichtung gibt über eine Notleitung 92 ein Signal zur Ansteuerung einer Notvorrichtung 93 ab. Vorzugsweise unterbricht diese Notvorrichtung die Kraftstoffzufuhr.

Das Stellwerk zur Beeinflussung der Leistungsabgabe der Brennkraftmaschine wird üblicherweise von dem Mikrorechner 1 mit Signalen beaufschlagt, die eine entsprechende Verstellung des Stellwerks bewirken. Die zweite Einrichtung überwacht den Mikrorechner auf seine korrekte Funktion.

Über die Datenleitung 5 tauschen der Mikrorechner 1 und die Überwachungseinrichtung 2 Informationen aus. Vorzugsweise sind dies impulsförmig kodierte Daten in serieller oder paralleler Form. Die Übertragung kann entweder nur in einer Richtung vorzugsweise vom Mikrorechner zur Überwachungseinrichtung oder in beide Richtungen erfolgen.

Der Mikrorechner berechnet ausgehend von den über die Eingangsdatenleitung 6 zugeführten Daten bezüglich verschiedener Betriebszustände Ausgangsgrößen zur Steuerung des Stellwerks der Brennkraftmaschine. Bei besonders sicherheitsrelevanten Ausgangsgrößen muß die richtige Funktionsweise des Mikrorechners 1 durch die Überwachungseinrichtung 2 überprüft werden. Solche sicherheitsrelevanten Ausgangsgrößen bzw. Stellwerke, sind zum Beispiel die Kraftstoffzumessung, insbesondere bei Dieselbrennkraftmaschinen, die Drosselklappenstellung bei fremdgezündeten Brennkraftmaschinen, Eingriffe auf die Lenkung, die Bremsen sowie alle Größen, die das Fahrverhalten der Brennkraftmaschine beeinflussen.

Erkennt die Überwachungseinrichtung einen sicherheitskritischen Betriebszustand, so erzeugt sie ein Sicherheitssignal, das über die Sicherheitsleitung 8 an die Verknüpfungseinrichtung 98 geleitet wird. Die Verknüpfungseinrichtung 98 leitet dann Notfahrmaßnahmen ein. Diese sehen vor, daß bei Vorliegen eines sicherheitskritischen Zustandes, die Ausgangsgröße zur Ansteuerung des Stellwerks in einen solchen Wertebereich liegt, daß keine gefährlichen Betriebskenngrößen auftreten. So kann zum Beispiel bei der Steuerung der Kraftstoffzufuhr vorgesehen werden, daß die einzuspritzende Kraftstoffmenge auf einen maximal zulässigen Höchstwert begrenzt wird.

In Figur 2 ist eine Realisierung der Überwachungseinrichtung detaillierter ausgeführt. Elemente, die schon in Figur 1 enthalten sind, werden mit entsprechenden Bezugszeichen bezeichnet. Über eine Lesesteuerleitung 52 ist der Mikrorechner 1 mit einem ersten Zwischenspeicher 11 und einer Zeitablaufsteuerung 16 der Überwachungseinrichtung 2 verbunden.

Über eine erste Datenleitung 51 gelangen die Daten des Zwischenspeichers 11 zum Mikrorechner 1. Die Daten des ersten Zwischenspeichers werden aus einem freilaufenden Zähler 10 ausgelesen, der mit der Zeitbasis 4 verbunden ist. Des weiteren ist der Zähler 10 mit der Zeitablaufsteuerung 16 verbunden. Der erste Zwischenspeicher 11 steht ferner über einen Inverter 14 mit einem zweiten Zwischenspeicher 132 in Verbindung. Über eine Schreibsteuerleitung 53 ist der Mikrorechner mit dem zweiten Zwischenspeicher 132, einem dritten Zwischenspeicher 131 sowie mit der Zeitablaufsteuerung 16 verbunden. Über eine zweite Datenleitung 54 beaufschlagt der Mikrorechner den dritten Zwischenspeicher 131 mit Daten.

Ein Vergleicher 15 ist mit dem zweiten Zwischenspeicher 132 und dem dritten Zwischenspeicher 131 verbunden. Die Ausgänge des Vergleichers 15 und der Zeitablaufsteuerung 16 beaufschlagen eine Verknüpfungseinrichtung 17 mit Signalen. Deren Ausgangssignal stellt das Sicherheitssignal bereit, mit dem dann die Verknüpfungseinrichtung 98 zur Bildung der Ausgangsgröße zur Ansteuerung des Stellwerks beaufschlagt wird.

Die Funktionsweise dieser Überwachungseinrichtung ist nun wie folgt. Der Mikrorechner gibt über die Lesesteuerleitung 52 einen Lesebefehl an den ersten Zwischenspeicher 11. Daraufhin wird über die Datenleitung 51 der Inhalt des Zwischenspeichers 11 in den Mikrorechner eingelesen. Der Inhalt des ersten Zwischenspeichers 11 entspricht dem Inhalt des freilaufenden Zählers 10. Dieser Zähler 10 zählt die von der Zeitbasis 4 abgegebenen Impulse. Der Mikrorechner invertiert die aus dem ersten Zwischenspeicher 11 ausgelesenen Daten. Dies bedeutet er berechnet den inversen Wert. Bei digitalen Signalen bedeutet dies, daß alle logischen Werte invertiert werden.

Über die Schreibsteuerleitung 53 wird der dritte Zwischenspeicher 131 dahingehend aktiviert, daß der Mikrorechner in den dritten Zwischenspeicher 131 den vom Hauptrechner invertierten Zählerstand einliest. Der vom Mikrorechner gelesene Zählerstand wird beim Lesevorgang in den ersten Zwischenspeicher 11 abgelegt, während des Schreibvorgangs wird der Speicherinhalt im Inverter 14 in seine inverse Form übergeführt und im zweiten Zwischenspeicher 132 abgelegt.

Im zweiten Zwischenspeicher 132 steht also der in der Überwachungseinrichtung direkt invertierte Wert. In dem dritten Zwischenspeicher 103 steht der von dem Mikrorechner invertierte Wert. Diese beiden Werte werden in dem Vergleicher 15 verglichen. Stimmen die beiden Werte nicht überein, so werden Notfahrmaßnahmen eingeleitet. Hierzu nimmt das Sicherheitssignal einen solchen Wert an, daß das sicherheitsrelevante Ausgangssignal in den sicheren Betriebszustand versetzt wird. Vorzugsweise wird die Brennkraftmaschine ausgeschaltet.

Die Zeitablaufsteuerung 16 greift über eine weitere Verknüpfungseinrichtung 17 in das Sicherheitssignal ein. Die Zeitablaufsteuerung 16 überwacht, ob das Lesesteuersignal periodisch angelegt wird und ob zwischen dem Anlegen des Lesesteuersignals und dem nachfolgenden Schreibsteuersignal eine bestimmte Maximalzeit nicht überschritten wird. Ist dies der Fall, so wird ebenfalls ein entsprechendes Signal abgegeben.

Besonders vorteilhaft können bei dem Ausführungsbeispiel auch die Funktionen der Überwachungseinrichtung und des Mikrorechners vertauscht werden. Dies bedeutet zum Beispiel, daß der Zähler sich in dem Mikrorechner befindet und die Überwachungseinrichtung den Zählerstand vom Mikrorechner übernimmt. Ferner kann auch der Vergleicher 15 im Mikrorechner enthalten sein. Wesentlich ist nur, daß sowohl der Mikrorechner als auch die Überwachungseinrichtung die gleichen Daten verarbeiten (invertieren) und der Mikrorechner und/oder die Überwachungseinrichtung die beiden Ergebnisse vergleicht. Weichen die beiden Ergebnisse voneinander ab und/oder steht das Ergebnis nicht innerhalb einer vorgegebenen Zeitspanne bereit, so wird auf einen fehlerhaften Betriebszustand erkannt.

Mit einer weiteren Ausgestaltung des Ausführungsbeispiels ist es möglich, auch die Überwachungseinrichtung auf Fehlfunktion zu überprüfen. Dabei wird wie folgt vorgegangen. Der Mikrorechner gibt gelegentlich ein falsches Ergebnis aus bzw. er überschreitet die vorgegebene Zeitgrenze. Dies hat zur Folge, daß die Überwachungseinrichtung einen Fehler erkennt. Die Fehlermeldung der Überwachungseinrichtung wird über die Datenleitung 5 zum Hauptrechner übertragen. Der Mikrorechner überprüft, ob die Fehlermeldung auftritt. Damit innerhalb des Gesamtsystems keine ungewollte Beeinflussung der Ausgangsgrößen erfolgt, wird das Sicherheitssignal erst nach einer zusätzlichen Verzögerungszeit wirksam, wenn der Mikrorechner das Ergebnis nicht innerhalb der Verzögerungszeit korrigiert.

Hierzu ist erforderlich, daß die Einrichtung gemäß der Figur 2 um die Einrichtung gemäß der Figur 3 ergänzt wird. Das Ausgangssignal der Verknüpfungseinrichtung 17 wird zum einen einem Verzögerungsglied 18, einem logischen Element 20 und dem Mikrorechner 1 zugeleitet. Das logische Element verknüpft das Ausgangssignal des Verzögerungsglieds 18 und das Ausgangssignal der Verknüpfungseinrichtung 17. Dadurch, daß das Sicherheitssignal zum Mikrorechner zurückgeführt wird, hat dieser die Möglichkeit, zu kontrollieren, ob die Überwachungseinrichtung korrekt arbeitet. Gibt der Mikrorechner bewußt ein fehlerhaftes Signal über die Datenverbindung 54 ab, so muß das Sicherheitssignal einen Fehlerzustand signalisieren. Das Verzögerungsglied 18 stellt sicher, daß am zweiten Eingang des logischen Elements 20 erst nach einer bestimmten Verzögerungszeit ein Fehlersignal anliegt. Am Ausgang des logischen Elements liegt erst dann ein Sicherheitssignal an, wenn das Ausgangssignal der Verknüpfungseinrichtung 17 längere Zeit einen Fehler anzeigt. Dadurch wird bewirkt, daß ein kurzzeitiges Ansprechen der Überwachungseinrichtung nicht zu einer Fehlermeldung und damit zu einer Reduktion der Leistung der Brennkraftmaschine führt. Erst wenn das Signal längere Zeit anliegt und sicher davon ausgegangen werden kann, daß der Mikrorechner nicht bewußt ein fehlerhaftes Signal abgegeben hat, wird ein entsprechendes Sicherheitssignal abgegeben.

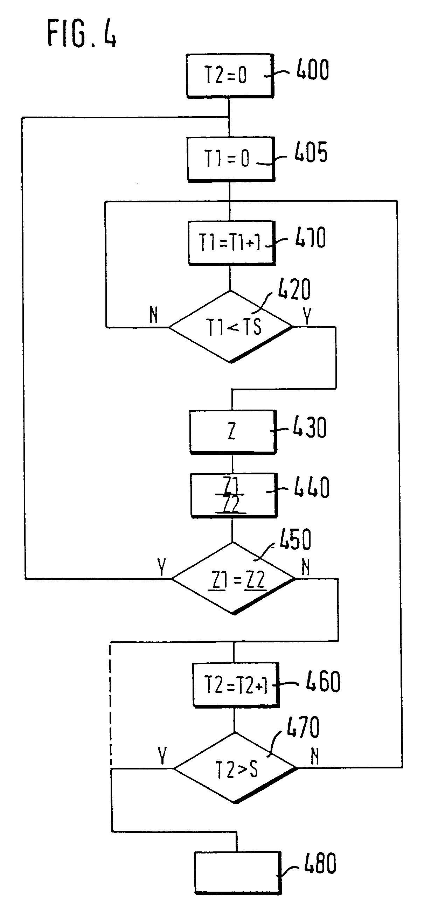

In Figur 4 ist die erfindungsgemäße Vorgehensweise anhand eines Flußdiagrammes verdeutlicht. In Schritt 400 wird ein zweiter Zeitzähler T2 und im Schritt 405 ein erster Zeitzähler T1 auf Null gesetzt. In Schritt 410 erfolgt eine Erhöhung des ersten Zeitzählers T1. Erkennt die Abfrage 420, daß eine vorgegebene Zeitschwelle TS noch nicht überschritten wird, so wird der Schritt 410 wiederholt. Dies geschieht solange, bis der Zeitzähler den Schwellwert überschreitet. Ist eine vorgegebene Zeitschwelle überschritten, so liest der Mikrorechner im Schritt 430 aus dem Zähler 10 der Überwachungseinrichtung den aktuellen Zählerstand Z aus.

Im abschließenden Schritt 440 bildet der Mikrorechner und die Überwachungseinrichtung 2 die invertierten Werte Z1 und Z2. Bei einem digitalen Signal sieht eine einfache Realisierung vor, daß die Nullen durch Einsen und die Einsen durch Nullen ersetzt werden. Diese Invertierung findet in dem Mikrorechner und der Überwachungseinrichtung gleichzeitig statt. Im Schritt 450 überprüft der Vergleicher 15, ob die beiden invertierten Werte übereinstimmen.

Anstelle eines Vergleichs kann auch lediglich ein Wert im Mikrorechner invertiert werden. Werden dann anschließend der invertierte und der ursprüngliche Wert addiert, so muß sich ein Additionsergebnis ergeben, das nur Einsen enthält. Erkennt die Abfrage 450, daß die Werte gleich sind, so startet mit dem Schritt 405 ein neuer Programmdurchlauf, in dem der erste Zeitzähler T1 wieder zurückgesetzt wird. Erkennt die Abfrage 450 dagegen, daß die Werte ungleich sind, so bedeutet dies, daß der Mikrorechner fehlerhaft arbeitet. Im einfachsten Fall wird daher im Schritt 480 ein Fehlersignal ausgegeben. Dies ist gestrichelt dargestellt.

Eine vorteilhafte Weiterbildung sieht vor, daß im Schritt 460 der zweite Zeitzähler erhöht wird. Erst wenn die zweite Abfrageeinheit 470 erkennt, daß der zweite Zeitzähler T2 größer als ein Schwellwert S ist, wird ein Fehler ausgegeben. Ist dieser Schwellwert noch nicht erreicht, so setzt das Programm mit dem Schritt 410 in dem der erste Zeitzähler erhöht wird, fort. Durch diese Vorgehensweise wird gewährleistet, daß nur dann auf Fehler erkannt wird, wenn die Abfrageeinheit 450 mehrmals eine Unplausibilität der Signale erkennt. Hierdurch können einmalig auftretende Fehler unterbunden werden.

Eine weitere Ausgestaltung sieht folgende Vorgehensweise vor. Die Überwachungseinrichtung 2 gibt zu einem vorgegebenen Zeitpunkt Daten in Form eines Prüfwerts an den Mikrorechner 1 ab. Der Mikrorechner bearbeitet diesen Prüfwert entsprechend wenigstens einer vorgegebenen Prüffunktion. Parallel hierzu bearbeitet die Überwachungseinrichtung den Prüfwert mit einer entsprechenden Prüffunktion. Die Überwachungseinrichtung gibt einen Zeitbereich zwischen TMIN und TMAX vor, innerhalb von dem der Mikrorechner der Überwachungseinrichtung ein Ergebnis übermitteln muß. Trifft innerhalb dieser vorgegebenen Zeitgrenzen das Ergebnis nicht oder falsch ein, so erkennt die Überwachungseinrichtung auf Fehler.

Empfängt die Überwachungseinrichtung das Ergebnis vom Mikrorechner, so gibt sie wieder ein neuen Prüfwert an den Mikrorechner ab. Besonders vorteilhaft werden die Prüfwerte durch eine Zufallsauswahl ermittelt. Hierzu zählt ein unabhängiger Zähler laufend von Null bis zu einem Endwert bzw. von einem Endwert auf Null. Zu vorgegebenen Zeitpunkten wird der Zählerstand des freilaufenden Zählers ausgelesen und als Prüfwert verwendet. Solche bevorzugten Zeitpunkte sind gegeben, wenn die Überwachungseinrichtung Daten vom Mikrorechner übermittelt bekommt oder wenn die Überwachungseinrichtung die korrekte Funktion des Mikrorechners erkannt hat,

Besonders vorteilhaft wird für den Zähler ein 4-Bit Zähler mit einer Frequenz von einem MHz gewählt. So können 16 unterschiedliche Prüfwerte vorgegeben werden. Erhält die Überwachungseinrichtung den Ergebniswert übermittelt, so wird der Zählerstand ausgelesen und als neuer Prüfwert an den Mikrorechner übergeben. Ein neuer Prüfwert wird immer dann gebildet, wenn die Überwachungseinrichtung den Ergebniswert übermittelt bekommt oder wenn die Überwachungseinrichtung das korrekte Arbeiten des Mikrorechners erkannt hat. Die Zufallsauswahl der Prüfwerte erfolgt dadurch, daß der jeweilige Zählerstand bei einem definierten Zeitpunkt als neuer Prüfwert verwendet wird. Der neue Prüfwert hängt vom Auftreten des alten Ergebniswerts ab. Der definierte Zeitpunkt liegt vorzugsweise zwischen dem Einlesen des Ergebniswerts oder dem Erkennen der korrekten Funktion des Mikrorechners.

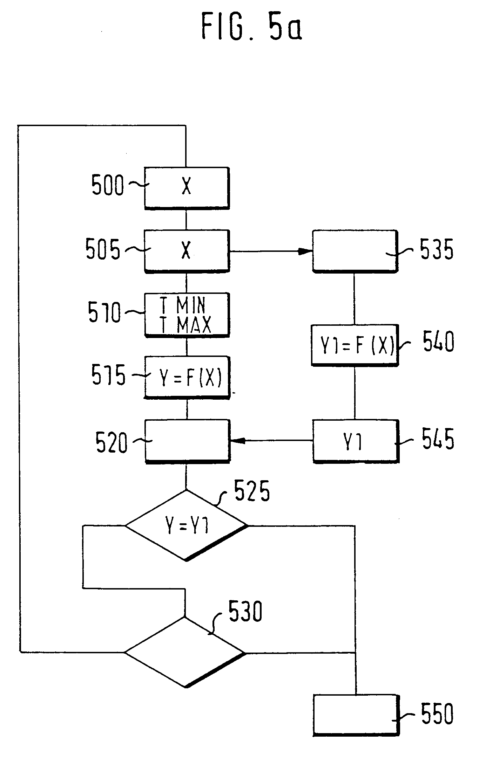

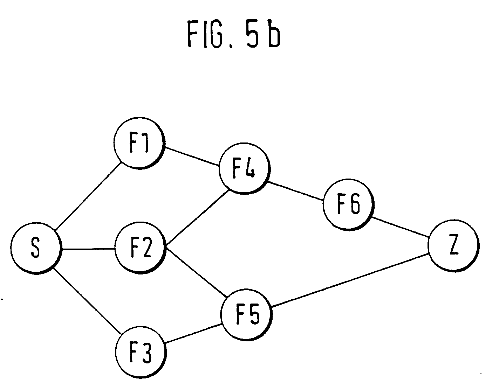

Zur Verdeutlichung dieses Verfahrens sei noch auf das Flußdiagramm Figur 5a verwiesen. In der linken Hälfte ist der Ablauf des Programms in der Überwachungseinrichtung und in der rechten Hälfte das Programm in dem Mikrorechner aufgezeigt. Im Schritt 500 startet das Programm in der Überwachungseinrichtung damit, daß der Zählerstand eines Zählers ausgelesen wird. Dieser Zählerstand wird als Prüfwert X verwendet.

Im Schritt 505 wird der Prüfwert an den Mikrorechner übergeben. Anschließend gibt die Überwachungseinrichtung im Schritt 510 eine untere Zeitschranke TMIN und eine obere Zeitschranke TMAX vor. Im Schritt 515 wird aus einem Prüfwert X gemäß der Prüffunktion F ein Ergebniswert Y berechnet. Im Schritt 535 erhält der Mikrorechner den Prüfwert X übermittelt. Im Laufe des üblichen Programmablaufs zur Berechnung der Steuerdaten sind einzelne Berechnungschritte eingefügt, in denen der Ergebniswert Y1 gemäß der Figur F ausgehend von dem Prüfwert X berechnet wird. Diese Berechnungen sind in dem Schritt 540 zusammengefaßt.

Besonders vorteilhaft ist es, wenn jedem Funktionsblock des Mikrorechners eine Prüffunktion zugeordnet ist. Im Schritt 545 wird das Ergebnis Y1 der überwachungseinrichtung übergeben. Diese erfaßt den Wert im Schritt 520. Der Abfrageblock 525 überprüft, ob das von der Überwachungseinrichtung vorgegebene Ergebnis Y mit dem von dem Mikrorechner bestimmten Ergebnis Y1 übereinstimmt. Ist dies nicht der Fall, so erkennt der Block 550 auf Fehler. Ist das Ergebnis korrekt, so überprüft die Zeitabfrage 530, ob das Ergebnis in dem vordefinierten Zeitintervall zwischen TMIN und TMAX eingegangen ist. Trifft dies ebenfalls zu, so wird in Schritt 500 ein neuer Zählerstand als Prüfwert ausgelesen.

Auch hier kann vorgesehen werden, daß der Mikrorechner in vorgegebenen Zeitabständen falsche Ergebniswerte an die Überwachungseinrichtung abgibt um deren Funktionsfähigkeit zu überwachen.

Die Prüffunktion wird wohl während des üblichen Steuerprogramms abgearbeitet. Die Prüffunktion wird aber nicht zur Berechnung der Steuerdaten benötigt. Die Berechnung der Prüffunktion ist so auf die einzelnen Komponenten des Mikrorechners und seiner peripheren Baugruppen aufgeteilt, daß auch externe Bauteile wie Speicher und der Daten- und Adressbus überprüft werden können.

Um eine besonders aussagekräftige Überwachung durchführen zu können, wird folgendes Verfahren angewandt. Betrachtet man die Menge der sicherheitsrelevanten Funktion, die durch die Überwachungseinrichtung überwacht werden sollen, so kann der zeitliche Funktionsablauf als gerichteter zyklenfreier Graph dargestellt werden. Ein Beispiel für einen solchen Graph ist in Figur 5b dargestellt. Am Startknoten S des Graphen wird der Prüfwert der Überwachungseinrichtung eingespeist, am Zielknoten Z soll das Ergebnis an die Überwachungseinrichtung geliefert werden.

Jeder Knoten hat eine Menge von Kanten, die zu ihm hinführen, jede dieser Kanten liefert eine Eingangsgröße. Der Knoten berechnet ausgehend von der Eingangsgrößen gemäß einer Funktion F1, F2, ... F6 die Ausgangsgröße, der an alle, direkt erreichbaren Knoten weitergeleitet wird. Der Zielknoten erhält ebenfalls eine Menge von Eingängen. Ist der Funktionsablauf fehlerfrei, so liefert der Zielknoten das Ergebnis an die Überwachungseinrichtung. Parallele Pfade im Graphen stellen den parallelen Ablauf des Programms dar, sequentielle Pfade stellen den seriellen Ablauf des Programms dar.

Die Berechnung der Steuergrößen im Mikrorechner erfolgt ebenfalls gemäß eines solchen Graphen. Der zur Berechnung der Steuergrößen verwendete Graph hat die gleiche Struktur, das heißt er besitzt die gleiche Knoten und Kanten mit gleicher Anordnung. Die Berechnung des Ergebisses erfolgt gemäß anderen Funktionen. Jeder Funktion zur Berechnung der Steuergröße ist eine Prüffunktion zugeordnet die während, vor oder nach der Steuerfunktion abgearbeitet wird. Bei geeigneter Wahl der einzelnen Prüffunktionen F1, F2, ... F6 kann auch ein Ausfall einer Teilfunktion des Mikrorechners zuverlässig erkannt werden. In der Überwachungseinrichtung erfolgt die Berechnung des Ergebnisses ebenfalls mit diesem Graph und der Prüffunktionen. Wenn der Mikrorechner korrekt arbeitet stimmen diese beiden Ergebnisse überein.

Der Mikrorechner 1 und die Überwachungseinrichtung 2 können auf verschiedene Arten miteinander verbunden sein. Drei verschiedene Möglichkeiten der Kopplung der Überwachungseinrichtung und des Mikrorechners sind in Figur 6 dargestellt.

Die verschiedenen Komponenten wie ein Speicherbaustein 50, ein Gate-Array 40 und der Mikrorechner 1 sind über einen Daten-/Adressbus untereinander verbunden. Bei dem Gate-Array handelt es sich um einen integriertes elektronischen Schaltkreis mit dem sich verschiedene logische Schaltungen realisieren lassen. Das Gate-Array wird vorzugsweise zu Adressdekodierung und zur redundanten Signalerfassung eingesetzt. Bei der Variante gemäß Figur 6a ist die Überwachungseinrichtung 2 über eine serielle Schnittstelle 45 direkt mit dem Mikrorechner gekoppelt. Diese Anordnung bietet den Vorteil, daß bei der Überprüfung der Daten-/Adressbus nicht benutzt wird.

Bei der Variante gemäß Figur 6b ist die Überwachungseinrichtung ebenfalls mit dem Daten-/Adressbus verbunden und tauscht über diesen die Daten mit dem Mikrorechner aus. Hieraus ergibt sich der Vorteil, daß keine langsame mit hohem Hardwareaufwand behaftete serielle Schnittstelle erforderlich ist. Auch ist keine zusätzliche serielle Schnittstelle am Mikrorechner erforderlich.

Bei einer weiteren Variante gemäß Figur 6c bilden Gate-Array und überwachungseinrichtung 1 eine bauliche Einheit. Hieraus ergibt sich gegenüber der Variante gemäß Figur 6b der zusätzliche Vorteil, daß die Ausfallrate reduziert wird, da die Zahl der Bauteile geringer ist.

In Figur 7 sind grob schematisch wesentliche Elemente der erfindungsgemäßen Einrichtung dargestellt. Wie in Figur 7a dargestellt, steht der Mikrorechner über je eine Leitung mit der Überwachungseinrichtung 2 der Notvorrichtung 93 in Verbindung. Die Überwachungseinrichtung 2 ist mit zwei Leitungen mit einer Verknüpfungseinrichtung 98 verbunden, die über die Ausgangsleitung 7 das Stellwerk 94 mit der Ausgangsgröße beaufschlagt.

Bei diesem Ausführungsbeispiel ermitteln der Mikrorechner und die Überwachungseinrichtung zeitabhängig welcher Programmschritt vom Mikrorechner gerade abgearbeitet wird. Der Mikrorechner gibt die Ausgangsgröße an die Überwachungseinrichtung, die diese direkt an die Verknüpfungseinrichtung 98 weiterleitet. Erkennt die Überwachungseinrichtung 2, daß der Mikrorechner nicht korrekt arbeitet, so gibt sie ein entsprechendes Signal, daß ein Fehlerzustand vorliegt an die Verknüpfungseinrichtung 98 ab. Liegt dieser Signal vor, so werden Notfahrmaßnahmen eingeleitet. Über die Notvorrichtung kann der Mikrorechner unabhängig von den übrigen Komponenten eine Abschaltung der Brennkraftmaschine veranlassen. Die Notvorrichtung unterbindet vorzugsweise die Kraftstoffzufuhr.

Die Einrichtung gemäß Figur 7b unterscheidet sich von der gemäß 7a darin, daß hier in die Ausgangsleitung 8 der Überwachungseinrichtung 2, die mögliche Fehlerzustände an die Verknüpfungseinrichtung übermittelt, eine Zähleinrichtung 97 eingeschaltet ist. Dieser Zähler 97 zählt wie oft ein Fehlerzustand auftritt. Die Zähleinrichtung gibt das Signal bezüglich des Fehlerzustandes erst dann weiter, wenn ein vorgegebener Zählerstand erreicht ist.

Notfahrmaßnahmen werden erst eingeleitet, wenn die Überwachungseinrichtung mehrmals einen Fehlerzustand der ersten Einrichtung erkannt hat.

Die Ausführungsform gemäß Figur 7c unterscheidet sich von der Ausführungsform gemäß Figur 7b darin, daß der Zähler 97 in die Überwachungseinrichtung integriert ist, und mit dieser eine bauliche Einheit bildet.

Ein weiteres Ausführungsbeispiel sieht vor, daß der Mikrorechner der Überwachungseinrichtung in vordefinierten Zeitabständen bestimmte Daten zum Beispiel die aktuelle Stellung des Programmzählers übermittelt. Die Überwachungseinrichtung überprüft, ob die Daten mit vorgegebenen Solldaten übereinstimmen, und ob sie zum vorgegebenen Zeitpunkt vorliegen.

Die Solldaten und die Zeitpunkte können in der Überwachungseinrichtung entweder fest vorgegeben sein, oder während einer sogenannten Grundinitialisierung von dem Mikrorechner vorbelegt werden. Des weiteren können ereignisorientierte Aktionen überwacht werden, wenn die Überwachungseinrichtung Informationen zugeführt werden, die diese Ereignisse kennzeichnen, und der Zeitabstand auf das entsprechende Ereignis bezogen ist. Dies bedeutet, daß der Mikrorechner abhängig von einem Programmzähler bestimmte Funktionen ausübt. Die Überwachungseinrichtung überprüft, ob der Mikrorechner zum richtigen Zeitpunkt die richtige Funktion abarbeitet und ob er die Funktion innerhalb einer vorgegebenen Zeit abgearbeitet ist.

In einem Speicher 72 der Überwachungseinrichtung ist wie in Figur 8 dargestellt, eine Tabelle mit Solldaten und zugehörigen Zeitdauern abgelegt. Der Mikrorechner muß zu dem im Speicher abgelegten Zeitpunkt über die Datenverbindung 54 Testdaten in die Überwachungseinrichtung einschreiben. Die Soll- und Testdaten werden in einem Vergleicher 21 miteinander verglichen. Ein Zeitgeber 22 überwacht den Zeitpunkt des Auftretens der Testdaten. Der Zeitgeber überprüft, ob die Testdaten innerhalb eines bestimmten Zeitraums auftreten. Treten die Daten früher oder später auf, so deutet dies auf einen Fehlerzustand hin.

Stimmen die Testdaten nicht mit den Solldaten überein und/oder wird die Zeitdauer überschritten oder unterschritten, so gibt die Übrewachungsschaltung 23 ein entsprechendes Sicherheitssignal über die Sicherheitsleitung 8 ab. Stimmen die Daten überein, so wird im Speicher der nächste Wert abgearbeitet. Der Speicher ist vorzugsweise als RAM-Speicher realisiert, der durch einen als Ringzähler aufgebauten Zähler 74 addressiert und beim Einschalten durch den Mikrorechner initialisiert wird. Legt man in den Speicher zum Beispiel die Programmzählerstände des Mikrorechners an bestimmten Punkten eines Steuerprogramms sowie Maximalwerte für die zugehörigen Programmlaufzeiten zwischen diesen Punkten ab, so kann man durch die Überwachungseinrichtung den Programmablauf kontrollieren. In diesem Fall ist in der linken Spalte die maximal erlaubt Rechenzeit und in der rechten Spalte der entsprechende Programmbefehl abgelegt. Entsprechend können auch ereignisgesteuerte Abläufe überwacht werden. In diesem Fall wird überprüft, ob nach einem bestimmten Ereignis innerhalb einer vorgegeben Zeitdauer ein weiteres Ereignis auftritt. So muß zum Beispiel bei Auftreten eines Flankenwechsels des Drehzahlsignals innerhalb einer bestimmten Zeitdauer ein erneuter Flankenwechsel registriert werden.

Ein weiteres Ausführungsbeispiel sieht vor, daß besonders sicherheitsrelevante Eingangssignale, wie zum Beispiel das Drehzahlgebersignal im Mikrorechner und der Überwachungseinrichtung parallel zugeführt und unabhängig voneinander erfaßt werden. Dem Mikrorechner und der Überwachungseinrichtung werden die Ausgangssignale eines oder mehrerer Sensoren als erste Daten zugeführt. Die von dem Mikrorechner und der Überwachungseinrichtung erfaßten Daten werden dann verglichen. Hierzu wird vorzugsweise der von der Überwachungseinrichtung erfaßte Wert dem Mikrorechner zugeführt und dort weiterverarbeitet.

Eine weitere Verbesserung eines solchen Systems ergibt sich dadurch, daß nicht ein Sensor, sondern zwei Sensoren verwendet werden, wobei der eigentliche Drehzahlgeber dem Mikrorechner und der Hilfsdrehzahlgeber der überwachungseinrichtung zugeordnet werden können. Dabei kann zusätzlich vorgesehen werden, daß die Überwachungseinrichtung und/oder der Mikrorechner eine Grenzwertüberwachung vornimmt und dabei das Vorliegen eines außerhalb des/der Grenzwerte liegenden Meßwertes überprüft.

Zur Realisierung eines solchen Systems sei auf die Figur 9 verwiesen. Über eine Leitung 61 stehen der Mikrorechner 1 und die Überwachungseinrichtung 2 mit einem nicht dargestellten Sensor in Verbindung. Das Gebersignal gelangt jeweils zu einer Periodendauermessung und/oder Frequenzmessung 24 bzw. 25, die mit den Zeitbasen 3 bzw. 4 in Verbindung stehen. Die Überwachungseinrichtung ist über eine Leitung 51 mit dem Mikrorechner verbunden. Die Periodendauermessung 25 und die Leitung 51 führen zu einer Vergleichseinheit 26. Das Ausgangssignal der Vergleichseinheit 26 gelangt zu einem Sperrglied 27. An dessen zweitem Eingang die Stellgröße anliegt.

Die Periodendauermessung 24 der Überwachungseinrichtung 2 gibt ihr Ausgangssignal über die Leitung 51 an den Mikrorechner und an einen Grenzwertvergleicher 28. Dieser steht mit zwei Zwischenspeichern 29 und 30 in Verbindung. Diese stehen über die Verbindung 54 mit dem Mikrorechner in Kontakt.

Das Gebersignal gelangt über die Leitung 61 sowohl zum Mikrorechner als auch zu der Überwachungseinrichtung. Dort werden sie jeweils durch die Periodendauermessung und/oder Frequenzmessung 24 bzw. 25 mittels der Zeitbasen 3 bzw. 4 erfaßt. Das Meßergebnis der Überwachungseinrichtung wird über die Verbindung 51 an den Mikrorechner übertragen und in der Vergleichseinheit 26 mit dem Meßergebnis des Mikrorechners verglichen. Bei Nichtübereinstimmung wird das sicherheitsrelevante Ausgangssignal über das Sperrglied 27 gesperrt. Innerhalb der Überwachungseinheit wird das Meßergebnis der Periodendauermessung 24 in dem Grenzwertvergleicher 28 mit einem oberen Grenzwert MAX und einem unteren Grenzwert MIN verglichen. Liegt das Meßergebnis nicht innerhalb dieser Grenzwerte, so wird das sicherheitsrelevante Ausgangssignal über das Sicherheitssignal gesperrt. Die Grenzwerte MAX bzw. MIN, die in den Zwischenspeichern 29 und 30 abgelegt sind, können vom Mikrorechner über die Verbindung 54 beliebig vorgegeben werden.

## Patentansprüche

1. System zur Steuerung eines Kraftfahrzeugs, mit einer ersten Einrichtung zur Bestimmung von zur Steuerung des Kraftfahrzeuges benötigter Steuerdaten, mit einer zweiten Einrichtung zur Überwachung der ersten Einrichtung, wobei die erste Einrichtung ausgehend von ersten Daten zweite Daten gemäß einer Prüffunktion ermittelt und die zweite Einrichtung ausgehend von den ersten Daten dritte Daten gemäß der Prüffunktion ermittelt, wobei die erste und/oder die zweite Einrichtung abhängig von dem Vergleich zwischen den zweiten Daten und den dritten Daten einen sicherheitsrelevanten Fehlerzustand erkennt, dadurch gekennzeichnet, daß die erste Einrichtung von Zeit zu Zeit fehlerhafte zweite Daten vorgibt um die zweite Einrichtung zu überprüfen.

2. System zur Steuerung eines Kraftfahrzeuges nach Anspruch 1, dadurch gekennzeichnet, daß die erste und die zweite Einrichtung ausgehend von den ersten Daten jeweils die zweiten und dritten Daten ermittelt und daß die erste und/oder die zweite Einrichtung einen Fehlerzustand erkennt, wenn die zweiten und dritten Daten nicht übereinstimmen und/oder nicht zu einem vorgegebenen Zeitpunkt zur Verfügung stehen.

3. System zur Steuerung eines Kraftfahrzeuges nach einem der vorhergehenden Ansprüche, dadurch gekennzeichnet, daß die ersten Daten durch den Wert eines Zählers in der ersten oder in der zweiten Einrichtung definiert werden.

4. System zur Steuerung eines Kraftfahrzeuges nach einem der vorhergehenden Ansprüche, dadurch gekennzeichnet, daß die erste und/oder die zweite Einrichtung jeweils den invertierten Wert der ersten Daten bildet.

5. System zur Steuerung eines Kraftfahrzeuges nach der vorhergehenden Ansprüche, dadurch gekennzeichnet, daß die erste Einrichtung zu vorgegebenen Zeitpunkten bestimmte Daten an die zweite Einrichtung übermittelt, und daß die zweite Einrichtung die Daten auf den richtigen Wert und den korrekten zeitlichen Abstand kontrolliert.

6. System zur Steuerung eines Kraftfahrzeuges nach Anspruch 5, dadurch gekennzeichnet, daß die ersten Daten die aktuelle Stellung des Programmzählers angeben.

7. System zur Steuerung eines Kraftfahrzeuges nach einem der vorhergehenden Ansprüche, dadurch gekennzeichnet, daß die erste Einrichtung und die zweite Einrichtung mit einem Sensor zur Erfassung von sicherheitsrelevanten Daten verbunden ist.

8. System zur Steuerung eines Kraftfahrzeuges nach Anspruch 7, dadurch gekennzeichnet, daß wenigstens zwei Sensoren zur Erfassung von sicherheitsrelevanten Signalen vorgesehen sind, und daß die erste Einrichtung und die zweite Einrichtung mit jeweils einem Sensor verbunden sind.

9. System zur Steuerung eines Kraftfahrzeuges nach einem der Ansprüche 8 oder 7, dadurch gekennzeichnet, daß einer der beiden Sensoren ein redundantes Signal erfaßt.

10. System zur Steuerung eines Kraftfahrzeuges nach wenigstens einem der Ansprüche 7 bis 9, dadurch gekennzeichnet, daß die erste Einrichtung und/oder die zweite Einrichtung die Ausgangssignale der Sensoren erfassen und die erste Einrichtung und/oder die zweite Einrichtung die Signale der beiden Sensoren vergleicht, und bei einer Abweichung auf Fehler erkannt wird.

11. System zur Steuerung eines Kraftfahrzeuges nach wenigstens einem der Ansprüche 7 bis 10, dadurch gekennzeichnet, daß die erste und/oder die zweite Einrichtung die Signale der Sensoren dahingehend überwacht, ob sie in einem vorgegebenen Bereich liegen.

12. System zur Steuerung eines Kraftfahrzeuges nach einem der vorhergehenden Ansprüche, dadurch gekennzeichnet, daß die ersten Daten gemäß einer Zufallsauswahl vorgegeben werden.

13. System zur Steuerung eines Kraftfahrzeuges nach Anspruch 12, dadurch gekennzeichnet, daß der Zählerstand eines Zählers ausgelesen wird, wenn die erste Einrichtung die zweiten Daten an die zweite Einrichtung übermittelt und daß dieser Zählerstand als erste Daten verwendet werden.

14. System zur Steuerung eines Kraftfahrzeuges nach einem der vorhergehenden Ansprüche, dadurch gekennzeichnet, daß die erste und die zweite Einrichtung über eine serielle Schnittstelle oder einen Daten-/Adressbus miteinander Daten austauschen.

15. System zur Steuerung eines Kraftfahrzeuges nach einem der vorhergehenden Ansprüche, dadurch gekennzeichnet, daß die zweite Einrichtung mit einem Gate-Array eine bauliche Einheit bildet.

16. System zur Steuerung eines Kraftfahrzeuges nach einem der vorhergehenden Ansprüche, dadurch gekennzeichnet, daß Notfahrmaßnahmen eingeleitet werden, wenn die zweite Einrichtung wenigstens einmal ein Fehlerzustand der ersten Einrichtung erkannt hat.

17. System zur Steuerung eines Kraftfahrzeuges nach Anspruchs 16, dadurch gekennzeichnet, daß Zählmittel vorgesehen sind, die die Fehlerzustände der ersten Einrichtung zählen, und daß erst nach mehreren erkannten Fehlerzuständen Notfahrmaßnahmen eingeleitet werden.

## Claims

1. System for controlling a motor vehicle, having a first device for determining control data required to control the motor vehicle, having a second device for monitoring the first device, the first device determining in accordance with a test function second data on the basis of first data and the second device determining in accordance with the test function third data on the basis of the first data, the first and/or the second device detecting a safety-relevant fault state as a function of the comparison between the second data and the third data, characterized in that the first device intermittently provides errored second data in order to test the second device.

2. System for controlling a motor vehicle according to Claim 1, characterized in that the first and the second device respectively determines the second and third data on the basis of the first data, and in that the first and/or the second device detects a fault state if the second and third data do not correspond and/or are not available at a prescribed time.

3. System for controlling a motor vehicle according to one of the preceding claims, characterized in that the first data are defined by the value of a counter in the first or in the second device.

4. System for controlling a motor vehicle according to one of the preceding claims, characterized in that the first and/or the second device in each case forms the inverted value of the first data.

5. System for controlling a motor vehicle according to the preceding claims, characterized in that the first device transfers specific data to the second device at prescribed times, and in that the second device monitors the data to determine whether they have the correct value and the correct timing interval.

6. System for controlling a motor vehicle according to Claim 5, characterized in that the first data indicate the current position of the program counter.

7. System for controlling a motor vehicle according to one of the preceding claims, characterized in that the first device and the second device are connected to a sensor for determining safety-relevant data.

8. System for controlling a motor vehicle according to Claim 7, characterized in that at least two sensors are provided for detecting safety-relevant signals, and in that the first device and second device are connected to in each case one sensor.

9. System for controlling a motor vehicle according to one of Claims 7 or 8, characterized in that one of the two sensors detects a redundant signal.

10. System for controlling a motor vehicle according to at least one of Claims 7 to 9, characterized in that the first device and/or the second device detect the output signals of the sensors and the first device and/or the second device compares the signals of the two sensors, and in the event of a deviation a fault is detected.

11. System for controlling a motor vehicle according to at least one of Claims 7 to 10, characterized in that the first and/or the second device monitors the signals of the sensors to determine whether they lie within a prescribed range.

12. System for controlling a motor vehicle according to one of the preceding claims, characterized in that the first data are prescribed in accordance with a random selection.

13. System for controlling a motor vehicle according to Claim 12, characterized in that the counter state of a counter is read out when the first device transfers the second data to the second device, and in that this counter state is used as first data.

14. System for controlling a motor vehicle according to one of the preceding claims, characterized in that the first and the second device exchange data with one another via a serial interface or a data/address bus.

15. System for controlling a motor vehicle according to one of the preceding claims, characterized in that the second device and a gate array form one constructional unit.

16. System for controlling a motor vehicle according to one of the preceding claims, characterized in that emergency running measures are initiated if the second device has detected a fault state of the first device at least once.

17. System for controlling a motor vehicle according to Claim 16, characterized in that counting means are provided which count the fault states of the first device and in that emergency running measures are not initiated until a plurality of fault states have been detected.

## Revendications

1. Système de commande d'un véhicule moteur à l'aide d'une première installation pour déterminer les données de commande nécessaires à la commande du véhicule, une seconde installation pour surveiller la première installation, et partant des premières données, la première installation détermine des secondes données selon une fonction de contrôle et la seconde installation, partant des premières données, détermine des troisièmes données selon la fonction de contrôle, la première et/ou la seconde installation détectant un état de défaut caractéristique pour la sécurité suivant la comparaison entre les secondes données et les troisièmes données, système caractérisé en ce que la première installation prédétermine de temps à autre des secondes données entachées d'erreurs pour vérifier la seconde installation.

2. Système de commande d'un véhicule à moteur selon la revendication 1, caractérisé en ce que la première et la seconde installation, partant des premières données déterminent chaque fois des secondes et des troisièmes données et en ce que la première et/ou la seconde installation détectent un état d'erreur si les secondes et les troisièmes données ne se correspondent pas et/ou n'ont pas été fournies à un instant donné.

3. Système de commande d'un véhicule à moteur selon l'une des revendications précédentes, caractérisé en ce que les premières données sont définies par la valeur d'un compteur dans la première ou dans la seconde installation.

4. Système de commande d'un véhicule à moteur selon l'une des revendications précédentes, caractérisé en ce que la première et/ou la seconde installation forme respectivement la valeur inversée des premières données.

5. Système de commande d'un véhicule à moteur selon l'une des revendications précédentes, caractérisé en ce que la première installation transmet à des instants prédéterminés des données définies vers la seconde installation et la seconde installation contrôle les données sur la valeur correcte et l'intervalle de temps correct.

6. Système de commande d'un véhicule à moteur selon la revendication 5, caractérisé en ce que les premières données indiquent la position instantanée du compteur de programme.

7. Système de commande d'un véhicule à moteur selon l'une des revendications précédentes, caractérisé en ce que la première installation et la seconde installation sont reliées à un capteur pour détecter les données caractéristiques de la sécurité.

8. Système de commande d'un véhicule à moteur selon la revendication 7, caractérisé par au moins deux capteurs pour détecter des signaux caractéristiques de la sécurité et la première installation ainsi que la seconde installation sont respectivement reliées à un capteur.

9. Système de commande d'un véhicule à moteur selon l'une des revendications 7 ou 8, caractérisé en ce que l'un des deux capteurs détecte un signal redondant.

10. Système de commande d'un véhicule à moteur selon au moins l'une des revendications 7 à 9, caractérisé en ce que la première installation et/ou la seconde installation détecte les signaux de sortie des capteurs et la première installation et/ou la seconde installation compare les signaux des deux capteurs et détecte un défaut en cas de différence.

11. Système de commande d'un véhicule à moteur selon au moins l'une des revendications 7 à 10, caractérisé en ce que la première et/ou la seconde installation surveille en permanence les signaux des capteurs pour vérifier qu'ils se situent dans une plage prédéterminée.

12. Système de commande d'un véhicule à moteur selon l'une des revendications précédentes, caractérisé en ce que les premières données sont prédéterminées selon un tirage aléatoire.

13. Système de commande d'un véhicule à moteur selon la revendication 12, caractérisé en ce qu'on lit l'état de comptage d'un compteur lorsque la première installation transmet les secondes données à la seconde installation et que cet état de comptage est utilisé comme première donnée.

14. Système de commande d'un véhicule à moteur selon l'une des revendications précédentes, caractérisé en ce que la première et la seconde installation échangent des données par un interface série ou un bus données/adresses.

15. Système de commande d'un véhicule à moteur selon l'une des revendications précédentes, caractérisé en ce que la seconde installation forme un composant avec une matrice de portes.

16. Système de commande d'un véhicule à moteur selon l'une des revendications précédentes, caractérisé en ce qu'on met en oeuvre des mesures de secours si la seconde installation détecte au moins une fois un état d'erreur de la première installation.

17. Système de commande d'un véhicule à moteur selon la revendication 16, caractérisé par des moyens de comptage qui comptent les états d'erreur de la première installation et ne mettent en oeuvre les mesures de secours qu'après avoir détecté plusieurs états d'erreur.
